# EUROPEAN PATENT SPECIFICATION

(11) **EP 1 655 533 B1**
(45) Date of publication and mention of the grant of the patent: **23.01.2008**
(21) Application number: 04105533.6
(22) Date of filing: 04.11.2004
(51) Int. Cl.: F17C 13/12, F17C 13/04

(54) **Gas tank with a flexible hose around it for gas relief in case of too high temperature or mechanical damage**
Gasbehälter mit einem flexiblen Schlauch um den Behälter für Gasauslass bei erhöhter Temperatur oder mechanischer Beschädigung
Réservoir à gaz avec un tuyau flexible situé autour de celui-ci pour libérer le gaz lorsque la température est trop élevée ou en cas de dommage mécanique

(43) Date of publication of application: 10.05.2006
(73) Proprietor: LUXEMBOURG PATENT COMPANY S.A., 7440 Lintgen (LU)
(72) Inventor: Andreas, Thomas, 54441, Temmels (DE)
(74) Representative: Schmitt, Armand

(56) References cited:
- EP-A- 0 010 465
- GB-A- 2 252 163
- US-A- 4 194 572

## Description

### TECHNICAL FIELD

The present invention generally relates to a gas tank containing a compressed combustible gas, such as e.g. compressed natural gas or compressed hydrogen. It relates more particularly to such a gas tank that is equipped with a safety relief system for providing an emergency discharge of said compressed combustible gas.

### BACKGROUND ART

For ecological reasons, many public transport services are now powering their bus fleets with compressed natural gas (CNG). On a CNG powered bus, the gas is typically stored in a series of elongated cylindrical tanks, also called CNG cylinders, which are mounted either below the floor of the bus or on the top of the roof of the bus. Due to the high pressures at which the highly flammable CNG must be stored (pressures of 350 bar are presently the state of the art), the CNG cylinders present a very high explosion hazard.

To prevent explosion of CNG cylinders e.g. in case of a fire, it is well known in the art to equip such tanks with thermally activated relief valves. Such a thermally activated relief valve generally includes a fusible plug of a eutectic metal sealing a discharge outlet of the relief valve. Once the temperature in the vicinity of the thermally activated relief valve reaches the yield point of the eutectic metal, the plug melts and frees the discharge outlet of the relief valve. Through a relief line connected to the discharge outlet of the relief valve, the pressurized gas is discharged in a controlled manner into the atmosphere, whereby an explosion of the CNG cylinder is prevented. As CNG cylinders are relatively long, it has been proposed to install a thermally activated relief valve at each end of the CNG cylinder.

A CNG fuel supply for a bus in which each CNG cylinder is equipped with several thermally activated relief valves is e.g. described in US patent N°6,112,760. It will be appreciated that such a safety relief system with distributed thermally activated relief valves is rather costly, but its efficiency is nevertheless limited because the risk area under surveillance is limited to the direct neighbourhood of the thermally activated relief valves. A safety system comprising a pressurized triggering hose is disclosed in GB 2 252 163.

Last but not least, it will be noted that the development of fuel cells working with compressed hydrogen stored in tanks at pressures of 600 bar makes it necessary to further improve the safety relief function of such tanks.

### TECHNICAL PROBLEM

Consequently, it is an object of the present invention to provide, at reasonable costs, an improved safety relief function for gas tanks containing compressed combustible gases. This object is achieved with a gas tank as claimed in claim 1.

### GENERAL DESCRIPTION OF THE INVENTION

A gas tank in accordance with the present invention is equipped with a safety relief system that comprises a pressurized triggering hose extending through a selected risk area around the tank, wherein a rupture of this triggering hose, due to a temperature increase or mechanical damage, will result in a pressure drop in the safety relief system that triggers an emergency discharge of the pressurized combustible gas from the gas tank. It will be appreciated that such a safety relief system with a pressurized triggering hose is a simple, inexpensive but very reliable safety measure that allows to keep-at little costs-large risk areas around the gas tank under surveillance for fire or mechanical threats. Due to a larger range of surveillance, this system warrants e.g. an earlier detection of a fire and, consequently, an emergency discharge of the pressurized combustible gas long before the gas tank risks to explode due to overheating. Furthermore, the pressurized triggering hose can be easily mounted in a risk area in such a way that it will be mechanically damaged if this risk area is subjected―e.g. in case of a vehicle crash―to severe mechanical damage. Consequently, severe mechanical damages in the risk area under surveillance will immediately trigger an emergency discharge of the pressurized combustible gas through relief lines, whereby the risk that compressed combustible gas will escape in an uncontrolled manner from a damaged gas tank is substantially reduced. In conclusion, the present invention provides, at reasonable costs, a considerably improved protection for gas tanks containing compressed combustible gases.

It will be appreciated that a pressurized triggering hose as used in the present invention is already used for triggering the discharge of fire extinguishing systems, working in particular with fire extinguishing gases (see e.g. WO 97/34659; US 4,356,868; EP 0 010 465; GB 2 115 905; US 3,827,502; WO 91/08022; GB 2128084). However, it is an incontestable merit of the present invention to have for the first time suggested the use of such a pressurized triggering hose for providing-in accordance with the present invention-an improved protection for gas tanks containing compressed combustible gases.

To protect a lengthy combustible gas tank, such as e.g. a long gas cylinder, the triggering hose preferably extends along the whole length of the gas tank. To provide a protection of the gas tank from all sides, the triggering hose preferably forms at least one loop around the gas tank. If a long gas cylinder shall be protected from all sides, the triggering hose preferably forms several loops along the gas cylinder, i.e. it forms a kind of detection helix around the gas cylinder.

A very reliable safety relief system comprises a relief valve with a relief control chamber, wherein a pressure drop in the relief control chamber triggers the relief valve to open, so that the gas tank discharges through the relief valve.

In a first, very simple embodiment of such a safety relief system, the triggering hose is connected with a first end to the relief control chamber and with a second end to an auxiliary gas tank. This auxiliary gas tank pressurizes the triggering hose and the relief control chamber with an auxiliary gas, which is preferably a non-combustible gas. The relief control chamber advantageously houses a piston cooperating with a valve seat to seal off a relief channel in the relief valve. This piston defines, in the relief control chamber, a sealed cross-section that is substantially bigger than the sealed cross-section of the valve seat. It follows that the pressure of the auxiliary gas in the triggering hose can be much lower than the pressure of the combustible gas in the gas tank. An important advantage of this embodiment with the auxiliary gas tank is that gas leakages at the relief valve or the triggering hose do not present a fire hazard.

In a second embodiment of such a safety relief system, the triggering hose is connected with a first end via a pressure reducing valve to the relief control chamber, whereas its second end is closed with a plug means. This safety relief system does not require an auxiliary gas tank. The pressure reducing valve pressurizes the triggering hose at a reduced pressure with compressed combustible gas from the relief control chamber. The relief control chamber advantageously houses a piston cooperating with a valve seat to seal off a relief channel in the relief valve. This piston has a small gas passage therein through which compressed combustible gas from the gas tank is capable of pressurizing the relief control chamber. In order to enhance the opening velocity of the relief valve, it is suggested to provide a closure ball that is capable of closing the small gas passage if pressure in the relief control chamber suddenly decreases.

A very compact and reliable embodiment of the pressure reducing valve includes a housing, a stepped pressure control piston and a spring means. The housing has an inlet channel opening in the relief control chamber, an outlet chamber, to which the triggering hose is connected, an axial bore connecting the inlet channel to the outlet chamber. A valve seat arranged between the inlet channel and the axial bore, and a vented chamber is arranged between the axial bore and the outlet chamber. The stepped pressure control piston has a first piston end, a second piston end and a piston channel extending therethrough. The first piston end seals off the axial bore relative to the vented chamber and has an axial sealing face that can be axially pushed onto the valve seat to seal off the latter. The second piston end seals off the outlet chamber relatively to the vented chamber. The piston channel extends through the stepped pressure control piston so as to be capable of pressurizing the outlet chamber with gas from the inlet channel when the sealing face of the first piston end is lifted from the valve seat. The spring means biases the stepped pressure control piston away from the valve seat.

Compressible gases that are stored in gas tanks in accordance with the present invention are e.g. compressed natural gas or compressed hydrogen.

It will be appreciated that the present invention is of particular interest for alternative fuel vehicles comprising large tanks with combustible gases compressed at very high pressures, such as for example compressed natural gas or compressed hydrogen.

### BRIEF DESCRIPTION OF THE DRAWINGS

Preferred embodiments of the invention will now be described, by way of example, with reference to the accompanying drawings in which:
**Fig. 1** is a schematic view of a gas tank that is equipped with a first embodiment of a safety relief system;
**Fig. 2** is a sectional view of a relief valve suitable for the system of Fig. 1;
**Fig. 3 i**s a schematic view of a gas tank that is equipped with a second embodiment of a safety relief system; and
**Fig. 4** is a sectional view of a relief valve with pressure reducing function suitable for the system of Fig. 3.

### DESCRIPTION OF PREFERRED EMBODIMENTS

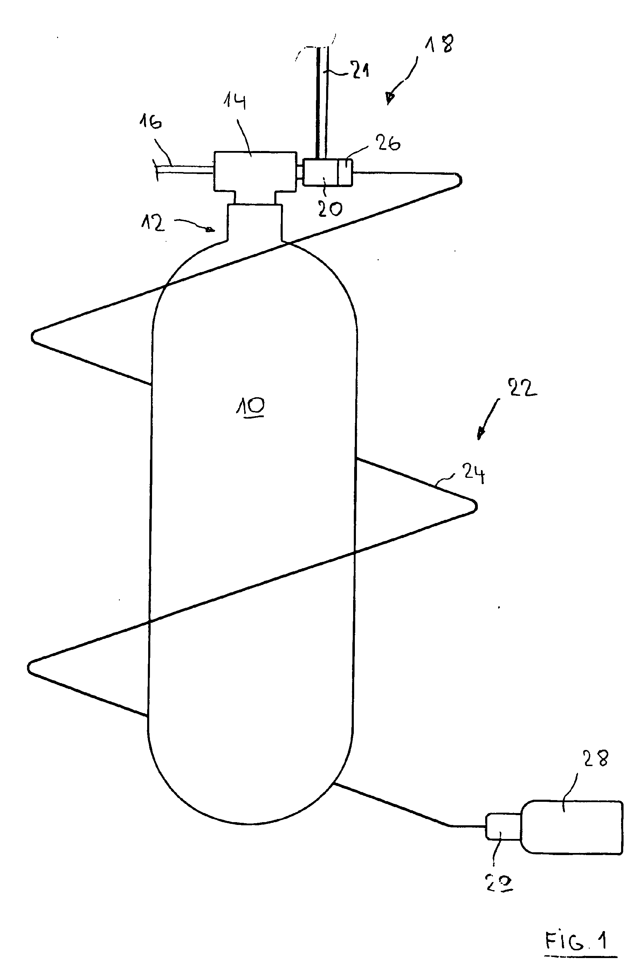

Fig. 1 shows a gas tank 10 containing a compressed combustible gas, e.g. compressed natural gas (CNG) or compressed hydrogen. For automotive applications, such compressed combustible gases are stored at pressures of several hundred bars in order to keep the gas tank 10 as small as possible.

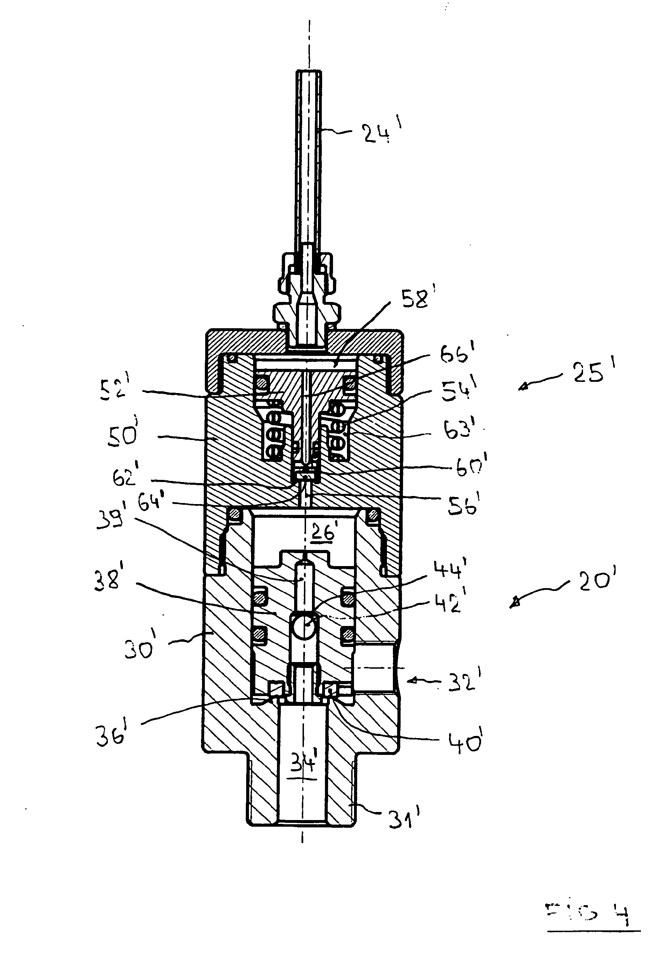

In Fig. 1 and 3 the gas tank 10 has the form of a gas cylinder with a bottleneck 12 having a gas outlet channel therein. However, the gas tank 10 may also the form of a sphere or any other form, provided that it is designed to withstand the high gas pressure. An outlet manifold 14 is screwed in the outlet channel of the gas cylinder 10. A gas supply line 16 is connected to the outlet manifold 14. This gas supply line 16 supplies a gas consumer, such as e.g. an internal combustion engine or a fuel cell (not shown), with combustible gas from the gas cylinder 10.

Reference number 18 in Fig. 1, respectively reference number 18' in Fig. 3, globally identify a first, respectively a second embodiment of a safety relief system providing an automatic emergency discharge of the compressed combustible gas stored in the gas cylinder 10. This safety relief system 18, 18' comprises a relief valve 20, 20' that is connected to the manifold 14, a relief line 21 that is connected to the relief valve 20, 20' and a triggering system 22, 22' that is used to trigger the opening of the relief valve 20, 20'. When the relief valve 20, 20' opens, the compressed combustible gas stored in the gas cylinder 10 is discharged in a controlled and safe manner through the relief line 21 into the atmosphere.

The triggering system 22 shown in Fig. 1 comprises a triggering hose 24 consisting e.g. of a gas tight thermoplastic material that is usually reinforced. The triggering hose 24 is designed to resist, at normal ambient temperature, to an internal gas pressure of 15 to 25 bar and to rupture under the same pressure if there is e.g. an abnormal temperature increase. A first end of the triggering hose 24 is connected to a relief control chamber 26 of the relief valve 20 and a second end to an auxiliary gas tank 28 containing a non-combustible gas, e.g. nitrogen or air. This auxiliary gas pressurizes the triggering hose 24 and the relief control chamber 26 with a pressure of about 15 to 25 bar, i.e. the normal operating pressure for which the triggering hose 24 has been designed. To reduce the volume of the auxiliary gas tank 28, the auxiliary gas may be stored in the auxiliary gas tank 28 at a pressure higher than the normal operating pressure for which the triggering hose 24 is designed. In this case the auxiliary gas tank 28 is equipped with a pressure reducing valve 29, which warrants that the pressure in the triggering hose 24 does not exceed the normal operating pressure for which it has been designed.

Small gas leakages occurring during normal operation are compensated by the gas reserve in the auxiliary gas tank 28 and will consequently not result in a major pressure drop in the triggering hose 24 and the relief control chamber 26. However, a rupture of the triggering hose 24, due to an abnormal temperature increase or mechanical damage, will result in a sudden pressure drop in the relief control chamber 26 that will trigger an opening of the relief valve 20, thereby allowing a controlled emergency discharge of the pressurized combustible gas from the gas cylinder 10 through the relief line 21 into the atmosphere.

In Fig. 1 and 3 it can be seen that the triggering hose 24, 24' forms several loops around the gas cylinder 10 and extends from the bottleneck end to the foot end of the gas cylinder 10. Thus, the triggering hose 24, 24' forms a continuous controlling helix around the gas cylinder 10. Furthermore, the triggering hose 24, 24' can additionally cover particular risk areas, i.e. areas wherein e.g. the fire risk is particularly high. Thus, emergency relief of the gas cylinder 10 will be triggered even before the immediate vicinity of the gas cylinder 10 heats up. Last but not least, the pressurized triggering hose 24, 24' can be easily mounted in a risk area in such a way that it will be mechanically damaged if the risk area is subjected-e.g. in case of a vehicle crash―to severe mechanical damage. Consequently, severe mechanical damages in the risk area under surveillance will immediately trigger an emergency discharge of the pressurized combustible gas through the relief line 21, whereby the risk that compressed combustible gas will escape in an uncontrolled manner from a damaged gas cylinder 10 is considerably reduced. This feature is of particular interest if the gas cylinder 10 is e.g. mounted in an automotive vehicle.

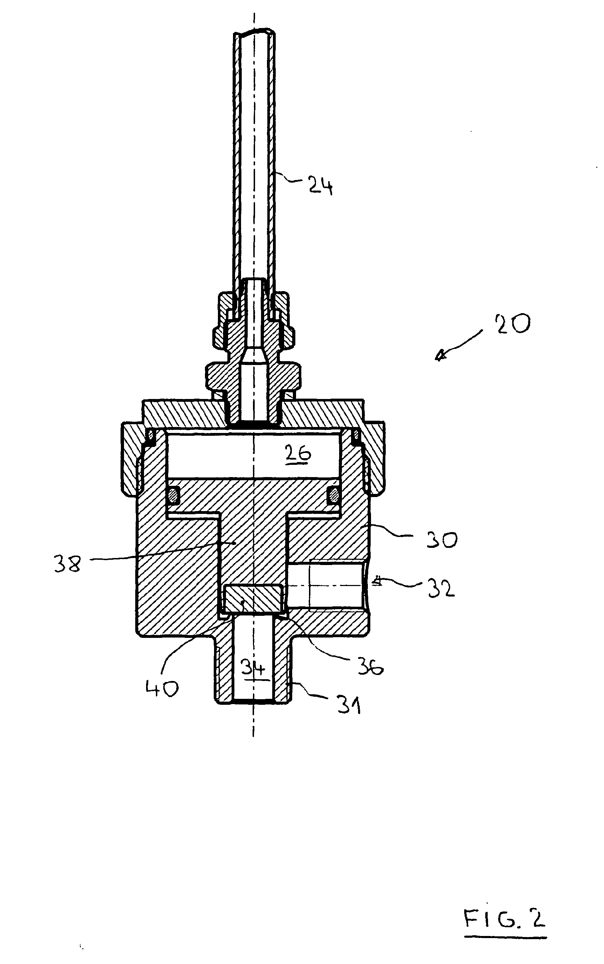

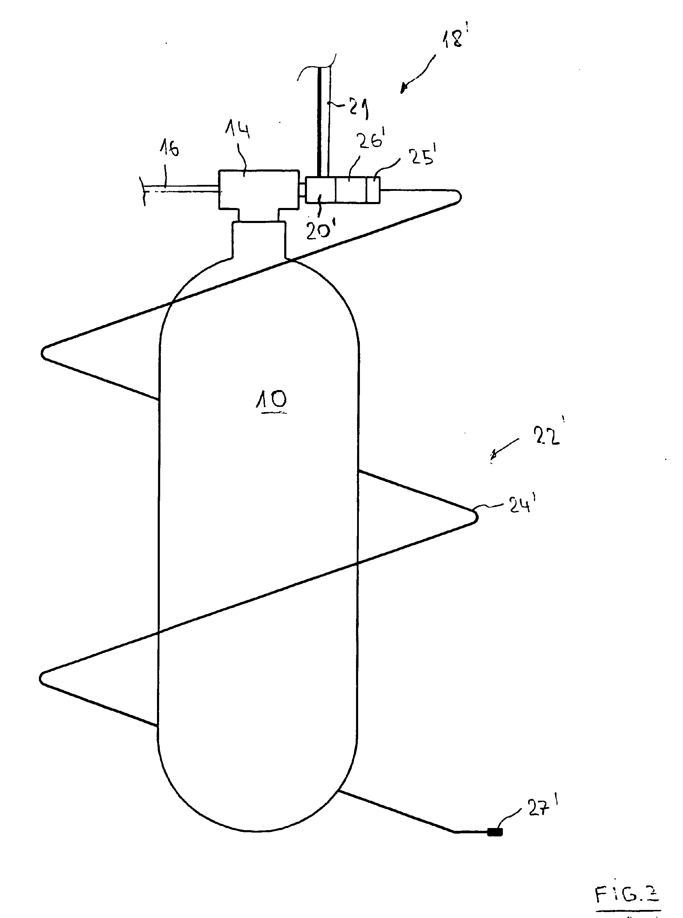

Fig. 2 shows a section through the relief valve 20. The latter comprises a housing 30 with an inlet connection 31, which is to be connected to the manifold 14, and an outlet connection 32, to which the relief line 21 is to be connected. The inlet connection 31 includes a gas inlet channel 34 that terminates within a valve seat 36. The relief control chamber 26, to which the triggering hose 24 is connected, houses a piston 38 that cooperates with the valve seat 36 to seal off the inlet channel 34. It will be noted that the piston 38 seals a cross-section in the relief control chamber 26 that is substantially bigger than the sealed cross-section of the valve seat 36. Consequently, for warranting that the piston 38 is firmly pushed with a frontal sealing element 40 onto its seat 36, i.e. that the relief valve 20 remains closed, the control pressure in the relief control chamber 26 can be much lower than the gas pressure in the gas inlet channel 34.

A second embodiment of a safety relief system will now be described with reference to Fig. 3 and Fig. 4. In the triggering system 22' shown in Fig. 3, the triggering hose 24', which is the equivalent of the triggering hose 24, is connected with a first end via a pressure reducing valve 25' to a relief control chamber 26' of the relief valve 20', whereas its second end is closed with an end plug 27'. In this embodiment, the relief control chamber 26' is pressurized with compressed combustible gas from the gas cylinder 10. The triggering hose 24' is pressurized through the pressure reducing valve 25' with compressed combustible gas from the relief control chamber 26'. The pressure reducing valve 25' warrants that the pressure in the triggering hose 24 is substantially lower than the pressure in the relief control chamber 26'. A rupture of the triggering hose 24', due to a temperature increase or mechanical damage, results in that the relief control chamber 26' can no longer compensate the gas flowing out of the ruptured triggering hose 24'. This results in a pressure drop in the relief control chamber 26' that triggers an opening of the relief valve 20', thereby allowing a controlled emergency discharge of the pressurized combustible gas from the gas cylinder 10 through the relief line 21 into the atmosphere.

Fig. 4 shows a section of the relief valve 20' including the pressure reducing valve 25'. The relief valve 20' comprises a housing 30' with an inlet connection 31', which is to be connected to the manifold 14, and an outlet connection 32', to which the relief line 21 is to be connected. The inlet connection 31' includes a gas inlet channel 34' that terminates within a valve seat 36'. The relief control chamber 26', to which the pressure reducing valve 25' is connected, includes a piston 38' that cooperates with the valve seat 36' to seal off the gas inlet channel 34'. The piston 38' has a small diameter calibrated gas passage 39' therein, through which compressed combustible gas from the gas inlet channel 34' is capable of pressurizing the relief control chamber 26', provided that there are no big gas losses out of the relief control chamber 26'. It will be noted that in the relief control chamber 26', the piston 38' seals a cross-section that is slightly bigger than the sealed cross-section of the valve seat 36'.

As long there is no big gas flow out of the relief control chamber 26', the pressure in relief control chamber 26' substantially equals the pressure in the gas inlet channel 34' (i.e. the pressure in the gas cylinder) and firmly pushes the piston 38' with a frontal sealing element 40' onto its valve seat 36'. However, if there is an important gas flow out of the relief control chamber 26', in particular because of a rupture of the triggering hose 24', this leakage cannot be compensated by the gas flowing through the small diameter gas passage 39'. It follows an important pressure drop in the relief control chamber 26', and the gas cylinder pressure acting onto the piston 38' through valve seat 36' will lift the piston 38' from its valve seat 36'. To enhance the lifting velocity of the piston 38', a small closure ball 42' is arranged in the small diameter gas passage 39'. If pressure in the relief control chamber 26' suddenly decreases, the closure ball 42' is firmly pushed against a ball seat 44', so that the small diameter gas passage 39' is closed. It follows that pressure in the relief control chamber 26' decreases more abruptly, which results in a faster lifting of the piston 38' from its valve seat 36'.

The pressure reducing valve 25' includes a housing 50', a stepped pressure control piston 52' and a piston biasing spring 54'. The housing 50' has an inlet channel 56', which opens into the relief control chamber 26', an outlet chamber 58', to which the triggering hose 24' is connected, an axial bore 60', which connects the inlet channel 56' to the outlet chamber 58', a valve seat 62', which is arranged between the inlet channel 56' and the axial bore 60', and a vented chamber 63', which is arranged between the axial bore 60' and the outlet chamber 58'. The stepped pressure control piston 52' of the pressure reducing valve 25' has a first piston end that seals off the axial bore 60' relative to the vented chamber 63'. This first piston end also has an axial sealing face 64' that can be axially pushed onto the valve seat 62' to seal off the latter. A second piston end, which has a much bigger cross-section than the first piston end, seals off the outlet chamber 58' relative to the vented chamber 63'. A gas channel 66' extends through the stepped pressure control piston 52' so as to be capable of pressurizing the outlet chamber 58' with gas from the inlet channel 56' when the sealing face 64' of the first piston end is lifted from the valve seat 62'. The piston biasing spring 54' biases the stepped pressure control piston 52' away from the valve seat 62'.

Operation of this very compact and reliable pressure reducing valve 25' is as follows. The pressure acting on the second end of the piston 52' in the outlet chamber 58' produces a closing force. The piston biasing spring 54' and the pressure acting on the first end of the piston 52' produce an opening force. As long as the closing force is smaller than the opening force, gas flows from the relief control chamber 26' over the valve seat 62' and the gas channel 66' into the outlet chamber 58'. If, due to the increasing pressure in the outlet chamber 58', the closing force gets bigger than the opening force, then the pressure control piston 52' is pushed with its axial sealing face 64' onto the valve seat 62', which interrupts gas communication over the valve seat 62' and the gas channel 66' into the outlet chamber 58'.

## Claims

1. A gas tank containing a compressed combustible gas, said gas tank (10) being equipped with a safety relief system (18, 18') providing an emergency discharge of said compressed combustible gas;
**characterized in that** said safety relief system (18, 18') comprises a pressurized triggering hose (24, 24') that extends through a selected risk area around the tank, wherein a rupture of said triggering hose, due to a temperature increase or mechanical damage, results in a pressure drop in said safety relief system (1.8, 18') that triggers an emergency discharge of said pressurized combustible gas from said gas tank (10).

2. The gas tank as claimed in claim 1, wherein said triggering hose (24, 24') extends along said gas tank (10).

3. The gas tank as claimed in claim 1 or 2, wherein said triggering hose (24, 24') forms several loops around said gas tank (10).

4. The gas tank as claimed in any one of claims 1 to 3, wherein said triggering hose (24, 24') forms a continuous controlling helix around the gas tank (10).

5. The gas tank as claimed in any one of claims 1 to 4, wherein said safety relief system (18, 18') comprises a relief valve (20, 20') with a relief control chamber (26, 26'), wherein a pressure drop in said relief control chamber (26, 26') triggers said relief valve (20, 20') to open, so that said gas tank (10) discharges through said relief valve (20, 20').

6. The gas tank as claimed in claim 5, wherein said triggering hose (24) is connected with a first end to said relief control chamber (26) and with a second end to an auxiliary gas tank (28), which pressurizes said triggering hose (24) and said relief control chamber (26) with an auxiliary gas.

7. The gas tank as claimed in claim 6, wherein said relief control chamber (26) houses a piston (38) cooperating with a valve seat (36) to seal off a relief channel (34) in said relief valve (20), said piston (38) defines, in said relief control chamber (26), a sealed cross-section that is substantially bigger than the sealed cross-section of said valve seat (36).

8. The gas tank as claimed in claim 5, wherein said triggering hose (24') is connected with a first end via a pressure reducing valve (25') to said relief control chamber (26') and its second end is closed with a plug means (27'); and wherein said pressure reducing valve (25') pressurizes said triggering hose at a reduced pressure with compressed combustible gas from said relief control chamber (26').

9. The gas tank as claimed in claim 8, wherein said relief control chamber (26') includes a piston (38') cooperating with a valve seat (36') to seal off a relief channel (34') in said relief valve (20'), said piston (38') having a small gas passage (39') therein through which compressed combustible gas from said gas tank (10) is capable of pressurizing said relief control chamber (26').

10. The gas tank as claimed in claim 9, including a closure ball (42') capable of closing said small gas passage (39') if pressure in said relief control chamber (26') suddenly decreases.

11. The gas tank as claimed in any one claims 8 to 10, wherein said pressure reducing valve (25') includes:
a housing (50') with an inlet channel (56') opening in said relief control chamber (26'), an outlet chamber (58'), to which said triggering hose (24') is connected, an axial bore (60') connecting said inlet channel (56') to said outlet chamber (58'), a valve seat (62') arranged between said inlet channel (56') and said axial bore (60'), and a vented chamber (63') arranged between said axial bore (60') and said outlet chamber (58');
a stepped pressure control piston (52') with a first piston end, a second piston end and a channel (66') extending therethrough, wherein said first piston end seals off said axial bore (60') relative to said vented chamber (63') and having an axial sealing face (64') that can be axially pushed onto said valve seat (62') to seal off the latter, said second piston end seals off said outlet chamber (58') relatively to said vented chamber (63'), and said channel (66') extends through said stepped pressure control piston (52') so as to be capable of pressurizing said outlet chamber (58') with gas from said inlet channel (56') when said sealing face (64') of said first piston end is lifted from said valve seat (62'); and
a spring means (54') biasing said stepped pressure control piston (52') away from said valve seat (62').

12. The gas tank as claimed in any one of claims 1 to 11, wherein said gas tank contains compressed natural gas.

13. The gas tank as claimed in any one of claims 1 to 11, wherein said gas tank contains high pressure hydrogen.

14. The gas tank as claimed in any one of claims 1 to 13 having the form of a gas cylinder.

15. A vehicle comprising a gas tank (10) in accordance with any one of the preceding claims.

## Patentansprüche

1. Gasbehälter enthaltend ein komprimiertes brennbares Gas, wobei der Gasbehälter (10) mit einem Sicherheitsauslasssystem (18, 18') versehen ist, das eine Notentleerung des komprimierten brennbaren Gases bereitstellt;
**dadurch gekennzeichnet, dass** das Sicherheitsauslasssystem (18, 18') einen druckbeaufschlagten Auslöseschlauch (24, 24') umfasst, der durch einen ausgewählten Gefahrenbereich rings um den Behälter verläuft, wobei ein Riss des Auslöseschlauchs wegen eines Temperaturanstiegs oder mechanischer Beschädigung zu einem Druckabfall im Sicherheitsauslasssystem (18, 18') führt, der eine Notentleerung des unter Druck stehenden brennbaren Gases aus dem Gasbehälter (10) auslöst

2. Gasbehälter nach Anspruch 1, wobei der Auslöseschlauch (24, 24') entlang dem Gasbehälter (10) verläuft

3. Gasbehälter nach Anspruch 1 oder 2, wobei der Auslöseschlauch (24, 24') mehrere Schleifen rings um den Gasbehälter (10) bildet

4. Gasbehälter nach irgendeinem der Ansprüche 1 bis 3, wobei der Auslöseschlauch (24, 24') eine durchgehende Erfassungsspirale rings um den Gasbehälter (10) bildet

5. Gasbehälter nach irgendeinem der Ansprüche 1 bis 4, wobei das Sicherheitsauslasssystem (18, 18') ein Überdruckventil (20, 20') mit einer Entlastungssteuerkammer (26, 26') umfasst, wobei ein Druckabfall in der Entlastungssteuerkammer (26, 26') das Öffnen des Überdruckventils (20, 20') auslöst, so dass der Gasbehälter (10) durch das Überdruckventil (20, 20') entleert wird

6. Gasbehälter nach Anspruch 5, wobei der Auslöseschlauch (24) mit einem ersten Ende an die Entlastungssteuerkammer (26) und mit einem zweiten Ende an einen Zusatzgasbehälter (28) angeschlossen ist, der den Auslöseschlauch (24) und die Entlastungssteuerkammer (26) mit einem Zusatzgas unter Druck setzt

7. Gasbehälter nach Anspruch 6, wobei die Entlastungssteuerkammer (26) einen Kolben (38) enthält, der mit einem Ventilsitz (36) zusammenwirkt, um einen Entlastungskanal (34) im Überdruckventil (20) abzudichten, wobei der Kolben (38) einen abgedichteten Querschnitt in der Entlastungssteuerkammer (26) definiert, der wesentlich größer als der abgedichtete Querschnitt des Ventilsitzes (36) ist

8. Gasbehälter nach Anspruch 5, wobei der Auslöseschlauch (24') mit einem ersten Ende über ein Druckminderventil (25') an die Entlastungssteuerkammer (26') angeschlossen ist und sein zweites Ende mit einem Stopfenmittel (27') verschlossen ist; und wobei das Druckminderventil (25') den Auslöseschlauch bei reduziertem Druck mit komprimiertem brennbarem Gas aus der Entlastungssteuerkammer (26') unter Druck setzt

9. Gasbehälter nach Anspruch 8, wobei die Entlastungssteuerkammer (26') einen Kolben (38') umfasst, der mit einem Ventilsitz (36') zusammenwirkt, um einen Entlastungskanal (34') im Überdruckventil (20') abzudichten, wobei der Kolben (38') einen kleinen Gaskanal (39') darin aufweist, durch den komprimiertes brennbares Gas aus dem Gasbehälter (10) die Entlastungssteuerkammer (26') mit Druck beaufschlagen kann

10. Gasbehälter nach Anspruch 9, umfassend eine Verschlusskugel (42'), die den kleinen Gaskanal (39') verschließen kann, wenn der Druck in der Entlastungssteuerkammer (26') plötzlich abnimmt

11. Gasbehälter nach irgendeinem der Ansprüche 8 bis 10, wobei das Druckminderventil (25') Folgendes umfasst:
ein Gehäuse (50') mit einem Einlasskanal (56'), der in die Entlastungssteuerkammer (26') öffnet; eine Auslasskammer (58'), an die der Auslöseschlauch (24') angeschlossen ist; eine Axialbohrung (60'), die den Einlasskanal (56') mit der Auslasskammer (58') verbindet; einen Ventilsitz (62'), der zwischen dem Einlasskanal (56') und der Axialbohrung (60') angeordnet ist; und eine belüftete Kammer (63'), die zwischen der Axialbohrung (60') und der Auslasskammer (58') angeordnet ist; einen gestuften Druckregelkolben (52') mit einem ersten Kolbenende, einem zweiten Kolbenende und einem dadurch verlaufenden Kanal (66'), wobei das erste Kolbenende die Axialbohrung (60') relativ zur belüfteten Kammer (63') abdichtet und eine axiale Dichtfläche (64') aufweist, die axial auf den Ventilsitz (62') geschoben werden kann, um Letzteren abzudichten, wobei das zweite Kolbenende die Auslasskammer (58') relativ zur belüfteten Kammer (63') abdichtet und der Kanal (66') durch den gestuften Druckregelkolben (52') verläuft, um so die Auslasskammer (58') mit Gas aus dem Einlasskanal (56') unter Druck setzen zu können, wenn die Dichtfläche (64') des ersten Kolbenendes aus dem Ventilsitz (62') gehoben wird; und
ein Federmittel (54'), das den gestuften Druckregelkolben (52') vom Ventilsitz (62') fort vorspannt

12. Gasbehälter nach irgendeinem der Ansprüche 1 bis 11, wobei der Gasbehälter komprimiertes Erdgas enthält

13. Gasbehälter nach irgendeinem der Ansprüche 1 bis 11, wobei der Gasbehälter Hochdruck-Wasserstoff enthält.

14. Gasbehälter nach irgendeinem der Ansprüche 1 bis 13 mit der Form eines Gaszylinders.

15. Fahrzeug umfassend einen Gasbehälter (10) nach irgendeinem der vorangehenden Ansprüche.

## Revendications

1. Réservoir à gaz contenant un gaz combustible comprimé, ledit réservoir à gaz (10) étant équipé d'un système de décompression de sécurité (18, 18') fournissant une décharge d'urgence dudit gaz combustible comprimé ;
**caractérisé en ce que** ledit système de décompression de sécurité (18, 18') comprend un tuyau flexible de déclenchement qui est sous pression (24, 24') et s'étend à travers une zone de risque sélectionnée autour du réservoir, une rupture dudit tuyau flexible de déclenchement, due à une augmentation de température ou à un dommage mécanique, résultant en une chute de pression dans ledit système de décompression de sécurité (18, 18'), qui déclenche une décharge d'urgence dudit gaz combustible comprimé hors dudit réservoir à gaz (10).

2. Réservoir à gaz selon la revendication 1, dans lequel ledit tuyau flexible de déclenchement (24, 24') s'étend le long dudit réservoir à gaz (10)

3. Réservoir à gaz selon la revendication 1 ou 2, dans lequel ledit tuyau flexible de déclenchement (24, 24') forme plusieurs boucles autour dudit réservoir à gaz (10).

4. Réservoir à gaz selon l'une quelconque des revendications 1 à 3, dans lequel ledit tuyau flexible de déclenchement (24, 24') forme une hélice continue de contrôle autour du réservoir à gaz (10).

5. Réservoir à gaz selon l'une quelconque des revendications 1 à 4, dans lequel ledit système de décompression de sécurité (18, 18') comprend une soupape de décompression (20, 20') avec une chambre de commande de décompression (26, 26'), dans lequel une chute de pression dans ladite chambre de commande de décompression (26, 26') déclenche ladite soupape de décompression (20, 20') de façon à ce qu'elle ouvre, de sorte que ledit réservoir à gaz (10) se décharge à travers ladite soupape de décompression (20, 20')

6. Réservoir à gaz selon la revendication 5, dans lequel ledit tuyau flexible de déclenchement (24) est connecté avec une première extrémité à ladite chambre de commande de décompression (26) et avec une deuxième extrémité à un réservoir à gaz auxiliaire (28), qui met sous pression ledit tuyau flexible de déclenchement (24) et ladite chambre de commande de décompression (26) avec un gaz auxiliaire

7. Réservoir à gaz selon la revendication 6, dans lequel ladite chambre de commande de décompression (26) héberge un piston (38) coopérant avec un siège de soupape (36) pour étancher un canal de décompression (34) dans ladite soupape de décompression (20), ledit piston (38) définit, dans ladite chambre de commande de décompression (26) une section transversale étanche qui est sensiblement plus grande que la section transversale étanche dudit siège de soupape (36).

8. Réservoir à gaz selon la revendication 5, dans lequel ledit tuyau flexible de déclenchement (24') est connecté avec une première extrémité par l'intermédiaire d'une soupape de réduction de pression (25') à ladite chambre de commande de décompression (26') et sa deuxième extrémité est fermée avec un moyen de bouchage (27') ; et dans lequel ladite soupape de réduction de pression (25') met sous pression ledit tuyau flexible de déclenchement à une pression réduite avec du gaz combustible comprimé provenant de ladite chambre de commande de décompression (26').

9. Réservoir à gaz selon la revendication 8, dans lequel ladite chambre de commande de décompression (26') héberge un piston (38') coopérant avec un siège de soupape (36') pour étancher un canal de décompression (34') dans ladite soupape de décompression (20'), ledit piston (38') ayant un petit passage de gaz (39') dans celui-ci à travers lequel le gaz combustible comprimé provenant dudit réservoir à gaz (10) est apte à mettre sous pression ladite chambre de commande de décompression (26')

10. Réservoir à gaz selon la revendication 9, incluant une bille de fermeture (42') apte à fermer ledit petit passage de gaz (39') si la pression dans ladite chambre de commande de décompression (26') diminue soudainement

11. Réservoir à gaz selon l'une quelconque des revendications 8 à 10, dans lequel ladite soupape de réduction de pression (25') inclut :
un logement (50') avec un canal d'entrée (56') s'ouvrant dans ladite chambre de commande de décompression (26'), une chambre de sortie (58'), à laquelle ledit tuyau flexible de déclenchement (24') est connecté, un alésage axial (60') connectant ledit canal d'entrée (56') à ladite chambre de sortie (58'), un siège de soupape (62') agencé entre ledit canal d'entrée (56') et ledit alésage axial (60'), et une chambre aérée (63') agencée entre ledit alésage axial (60') et ladite chambre de sortie (58') ; un piston de commande de pression étagé (52') avec une première extrémité de piston, une deuxième extrémité de piston et un canal (66') s'étendant à travers celui-ci, dans lequel ladite première extrémité de piston étanche ledit alésage axial (60') par rapport à ladite chambre aérée (63') et ayant une face de fermeture axiale (64') qui peut être axialement poussée sur ledit siège de soupape (62') pour étancher ce dernier, ladite deuxième extrémité de piston étanche ladite chambre de sortie (58') par rapport à ladite chambre aérée (63'), et ledit canal (66') s'étend à travers ledit piston de commande de pression étagé (52') de manière à être apte à mettre sous pression ladite chambre de sortie (58') avec le gaz provenant dudit canal d'entrée (56') lorsque ladite face de fermeture (64') de ladite première extrémité de piston est soulevée dudit siège de soupape (62') ; et
un moyen de ressort (54') poussant ledit piston de commande de pression étagé (52') à l'écart dudit siège de soupape (62').

12. Réservoir à gaz selon l'une quelconque des revendications 1 à 11, dans lequel ledit réservoir à gaz contient du gaz naturel comprimé

13. Réservoir à gaz selon l'une quelconque des revendications 1 à 11, dans lequel ledit réservoir à gaz contient de l'hydrogène sous haute pression

14. Réservoir à gaz selon l'une quelconque des revendications 1 a 13 ayant la forme d'une bouteille à gaz

15. Véhicule comprenant un réservoir à gaz (10) selon l'une quelconque des revendications précédentes
